# EUROPEAN PATENT SPECIFICATION

(11) **EP 4 078 742 B1**
(45) Date of publication and mention of the grant of the patent: **29.04.2026**
(21) Application number: 20902100.5
(22) Date of filing: 18.12.2020
(51) Int. Cl.: H02G 1/02, H02G 1/04, H02G 1/06, B66D 1/36, H02G 7/18

(54) **ANTI-ROTATION DEVICE FOR CABLE STRINGING**
DREHSICHERUNGSVORRICHTUNG FÜR KABELAUFZIEHEN
DISPOSITIF ANTI-ROTATION SERVANT AU DÉROULAGE DE CÂBLE

(30) Priority: 20.12.2019 CA 3065714; 20.12.2019 US 201962951920 P
(43) Date of publication of application: 26.10.2022
(73) Proprietor: Quanta Associates, L.P., Houston, TX 77008 (US)
(72) Inventor: O'CONNELL, Daniel, Neil, Burnaby BC, V5C 6S6 (CA); WABNEGGER, David, Karl, Burnaby BC, V5C 6S6 (CA); JODOIN, Raymond, Henry, Burnaby BC, V5C 6S6 (CA); PALMER, Robert, Wayne, Houston, TX 77056-6175 (US); GREEN, John, Christopher, Calgary AB, T2C 5A4 (CA)
(74) Representative: Williams Powell
(86) International application number: PCT/US2020/066159
(87) International publication number: WO 2021/127530

(56) References cited:
- CN-A- 108 365 569
- DE-B4- 19 839 739
- DE-C- 952 831
- US-A- 2 663 748
- US-A- 3 011 765
- US-A- 4 805 878
- US-A- 4 805 878

## Description

### TECHNICAL FIELD

The present disclosure relates to a device to assist with resisting twisting of a cable or wire while stringing the cable along an electrical power transmission/distribution network and to protect workers and equipment by insulating the cable and pulling line if the anti-rotation device tails accidentally contacts an energized powerline.

### BACKGROUND

Conductive and non-conductive cables are typically strung and installed along electrical power transmission/distribution networks. These cables are often formed from helically wound metal strands or wires.

The cables are pulled from a payout cable reel and passed through stringing blocks, travelers, sheaves or pulleys on supporting structures of the transmission/distribution network. Due to their helically wound construction, the cables have an inherent tendency to rotate or twist about the long axis of the cable in response to uncoiling forces while being pulled from the payout cable reel during stringing.

The tendency of cable to rotate or twist while being strung causes problems with strain and possible breakage or damage of the electrically conductive and non-conductive components in the cables due to the twisting forces. Twisting problems are particularly compounded when the cable is strung over an angular or irregular course where corners or turns are present.

Prior art devices have been designed with an aim to prevent such twisting. In most cases, the device includes a leader member or tow member connected at one end to the cable to be strung and at the other end to a pulling rope. One or more weighted sections are connected in series to form a tail and they are connected to the tow member by one end of the tail so as to hang down from the tow member. The tails counteract the twisting force or torque of the twisting cable.

In some cases, when twisting forces in the cable overcome the tails' resistance to the twisting, the tails may spin around the tow member about the long axis of the tow member. This is sometimes referred to as whip-lashing. Whip-lashing in addition to failing to prevent twisting of the cable, may be dangerous to the safety of personnel or equipment if the tails come in contact with adjacent wires which may be energized, thereby energizing the cable being strung, payout cable reel and pulling equipment.

In the prior art, the mass of the tail suspended from the tow member has been estimated to counter the force of the twisting rotation or torque in the cable. Generally, the tail is mounted at a point along the tow member such that the length of the tail can be accommodated in storage channels formed in and along the length of the tow member when the tail and tow member are simultaneously pulled through a pulley or sheave of the stringing system.

At least some weighted sections in the prior art are made from electrically conductive materials. In applicant's view, using electrically conductive materials along the entire length of a tail may present a further hazard since electrical charge is not prevented from travelling through the tails to the cable being strung, payout cable reel and pulling equipment so as to potentially injure personnel or damage equipment and property.

In the prior art applicant is aware of US Patent no. 4,805,878 which teaches a device having a line of weights consisting of a tube filled with weighted slugs or segments, wherein the weight of the weighted tube counteracts the tendency of the cable to twist.

US Patent no. 3,011,765 teaches a device having one or more articulated pendulums for counteracting the tendency of the cable to twist.

US Patent no. 2,663,748 teaches a device having one or more weighted arms comprised of a solid bar of material wherein the weight of each arm is calculated to oppose the twisting action of the tow line. US 4805878 discloses an apparatus for anti-rotation cable stringing. DE 952831 discloses a device for the simultaneous pulling and tensioning of several overhead lines. CN 108365569 discloses a one pull three balance weight traction device.

### SUMMARY

According to an aspect of the present invention, there is provided a process as claimed in claim 1. According to another aspect of the present invention, there is provided an anti-rotation device as claimed in claim 6. An anti-rotation device is provided for resisting rotation of a cable as it is strung through a transmission/distribution network and to protect workers and equipment by insulating the cable and pulling line if the anti-rotation device tails accidentally contacts an energized powerline. The device includes a tow component connectable to the cable at one end, and a plurality of pendulum-like insulated weighted tails suspended from the tow component. The plurality of the tails may be located in a spaced apart array along the tow component. Each insulated tail includes one or more insulated tail sections and one or more weighted tail sections pivotally mounted end-to-end, and removably coupled, to one another. An uppermost electrically insulated tail section is coupled to a connecting section connecting the tail to the tow component where the insulated tail forms a rotating "T" junction with the tow component.

The anti-rotation device includes a tow component having a plurality of tow sections connected end-to-end in the tow component.

The insulated tails in the array of tails are spaced apart along the tow component such that a length of the tow section between each tail is at least equal to the insulated tail lengths, assuming that the insulated tails are all the same length. In some embodiments the insulated tails may be of different lengths, so long as the associated tail-storage channel in the corresponding tow component has at least a corresponding length.

The insulated weighted tails are adapted to provide a counter-moment, counter to the rotational force moment, wherein the counter-moment of each insulated weighted tail is substantially equal to the rotational force of the cable acting on each insulated weighted tail in the array of insulated weighted tails.

lt is to be understood that other aspects of the present disclosure will become readily apparent to those skilled in the art from the following detailed description, wherein various embodiments of the disclosure are shown and described by way of illustration. As will be realized, the disclosure is capable of other and different embodiments and its several details are capable of modification in various other respects, all without departing from the scope of the present invention as set out in the claims. Accordingly the drawings and detailed description are to be regarded as illustrative in nature and not as restrictive.

### BRIEF DESCRIPTION OF THE DRAWINGS

A further, detailed, description of the disclosure, briefly described above, will follow by reference to the following drawings of specific embodiments of the disclosure. The drawings depict only typical embodiments of the disclosure and are therefore not to be considered limiting of its scope. In the drawings:
Figure 1 is side elevation view of one embodiment of the present device;
Figure 2 is a detailed side elevation view of one embodiment of an insulated weighted tail connected to the tow section;
Figure 3 is a detailed front elevation view of an insulated weighted tail and leading end of a tow section passing over a sheave used for stringing the cable;
Figure 4 is a side elevation view of Figure 3;
Figure 5 is a top plan view of a further embodiment of the present device;
Figure 6 is a side elevation view of Figure 5;
Figure 7 is a detailed cross sectional view taken along line A-A of Figure 5 showing connection of insulated weighted tail to a tow section;
Figure 8 is a detailed perspective view of the embodiment of Figure 1 showing a portion of the tow component and an articulated insulated weighted tail, with sections removed for clarity of the view, suspended therefrom;
Figure 9 is a perspective view encompassing the side elevation view of Figure 2;
Figure 10 is a perspective view of a conventional swivel for connecting the anti-rotation device to a pulling line;
Figure 11 is a perspective view of the front half section of the main section which couples behind the swivel of Figure 10;
Figure 12 is a perspective view of the back half section of the front main section which couples behind the front half section of Figure 11;
Figure 13 is the section through the tail connecting link of Figure 7 showing the cutout for the dog leg offset arm of the tail connector of Figure 14;
Figure 14 is a perspective view of the dog leg offset arm of the tail connector of Figure 7;
Figure 15a shows the tail connector of Figure 7 pivoting from the free hanging position in Figure 7 towards its storage position;
Figure 15b shows the tail connector of Figure 15a pivoted into its storage channel flush underneath the tail connecting link;
Figure 16 is a perspective view of an electrically insulating tail section of the weighted tail of Figure 8;

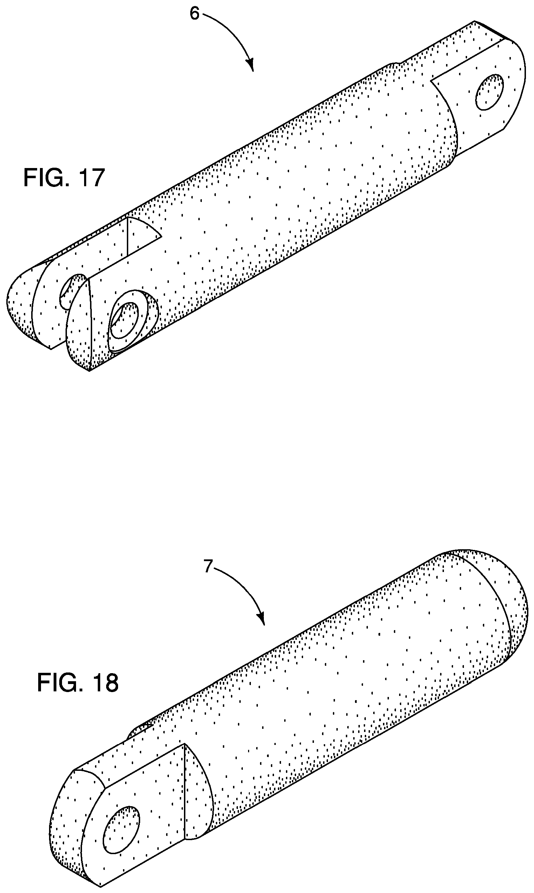

Figure 17 is a perspective view of a weighted tail section of the weighted tail of Figure 8; and
Figure 18 is a perspective view of a weighted end section of the weighted tail of Figure 8.
The drawings are not necessarily to scale and in some instances proportions may have been exaggerated in order to more clearly depict certain features.

### DETAILED DESCRIPTION

The description that follows and the embodiments described therein are provided by way of illustration of an example, or examples, of particular embodiments of the principles of various aspects of the present disclosure. These examples are provided for the purposes of explanation, and not of limitation, of those principles and of the disclosure in its various aspects.

The present disclosure provides a description of one example of an embodiment of an anti-rotation device 100. The anti-rotation device 100 uses weights which are pivotally connected end-to-end to form a weighted tail 600 for bending in a first plane, plane A, where the weighted tail 600 provides a resistive moment to the cable, in a second plane substantially orthogonal to the first plane. The resistive moment is substantially equal to, or more than, the twisting, rotational forces or torque of the cable being strung.

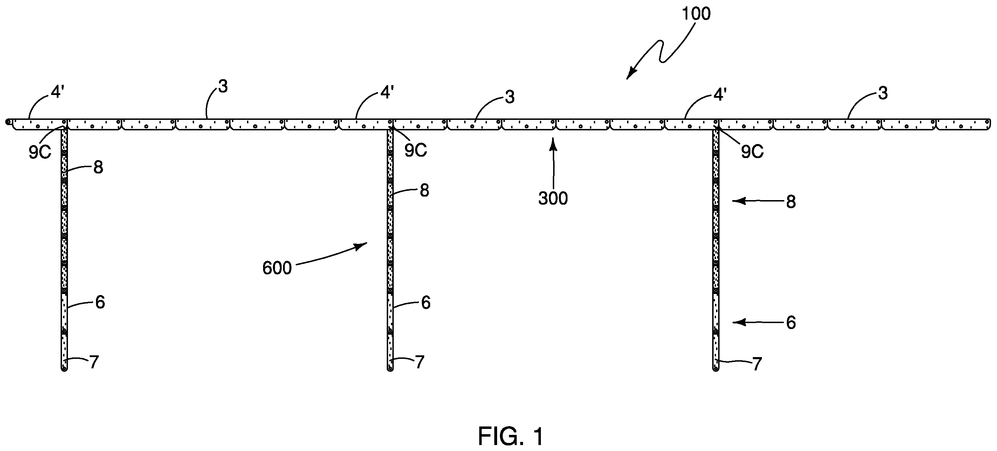

With reference to the Figures, wherein like reference numerals depict corresponding parts in each view, as seen in Figure 1, anti-rotation device 100 includes a tow component 300 and one or more insulated weighted tails 600 hanging from the tow component 300.

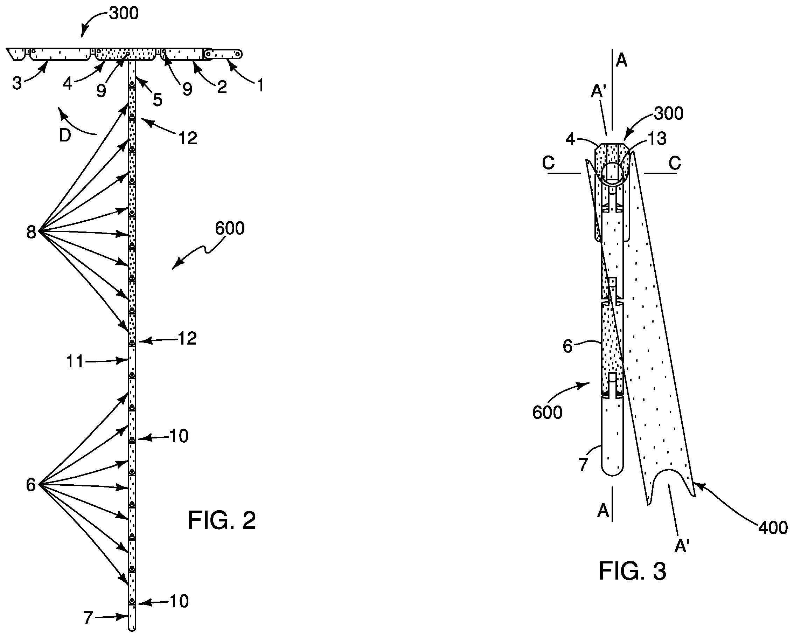

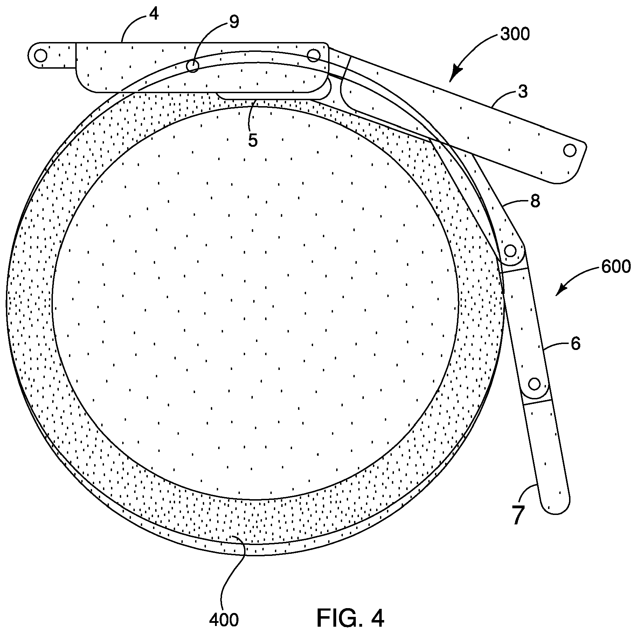

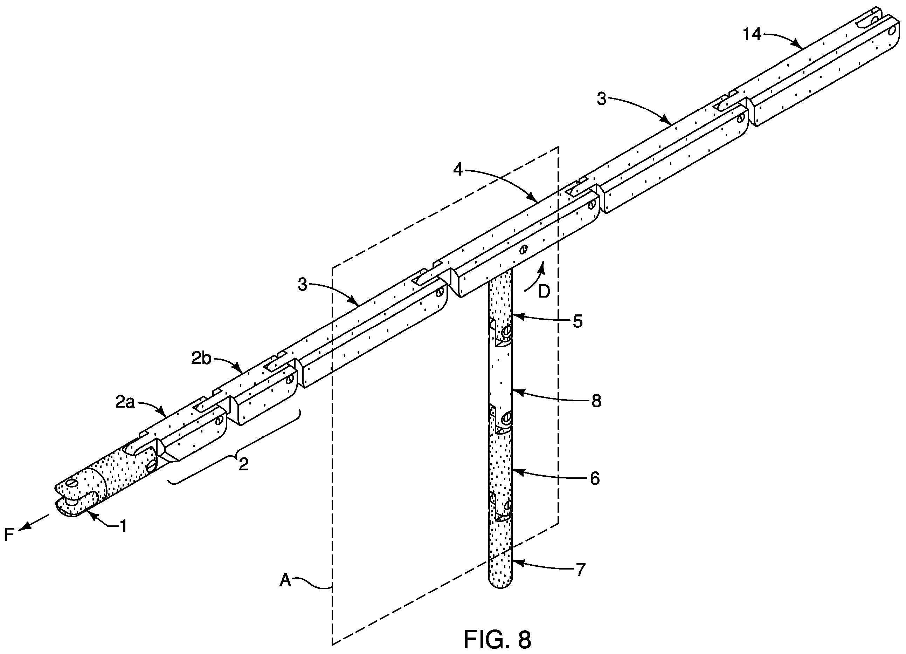

The tow component 300 comprises of a plurality of tow sections 3 that are pivotally connected end-to-end to one another to provide articulation which is restricted to the plane-of-bending, plane of bending "A" seen illustrated diagrammatically in Figure 8, of the tow component 300. Tow component 300 bends when for example it is pulled over a traveler or sheave such as seen in Figure 4 where tow component 300 is shown being pulled over a traveler or sheave 400. The plane of bending "A" of the tow component 300 is shown in dotted outline in Figure 8 and coincides with a plane containing the tow and tail components 300 and 600 and the traveler or sheave 400, such as seen in Figures 3 and 4, when the tow and tail components are being simultaneously pulled through and over the traveler or sheave 400. A direction of pull F is shown by way of illustration in Figure 8.

The tow sections 3 are preferably releasably connected to one another to allow adjustment of the length of the tow component 300 by removing or adding tow sections 3. The releasable connection between tow sections may advantageously be single degree of freedom hinges, such as pinned hinges 9, so as to constrain the bending articulation of the tow sections relative to one another to solely within the plane-of-bending A.

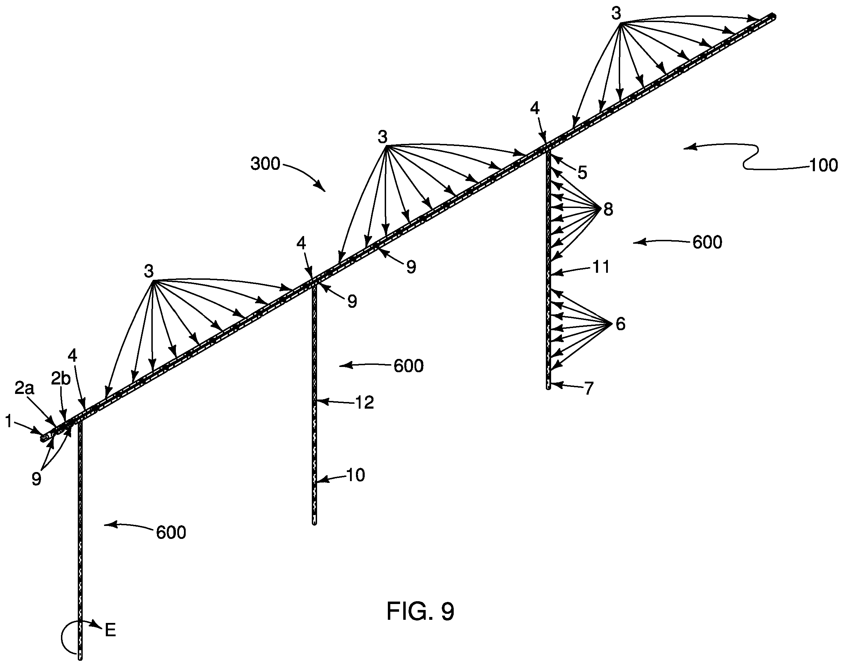

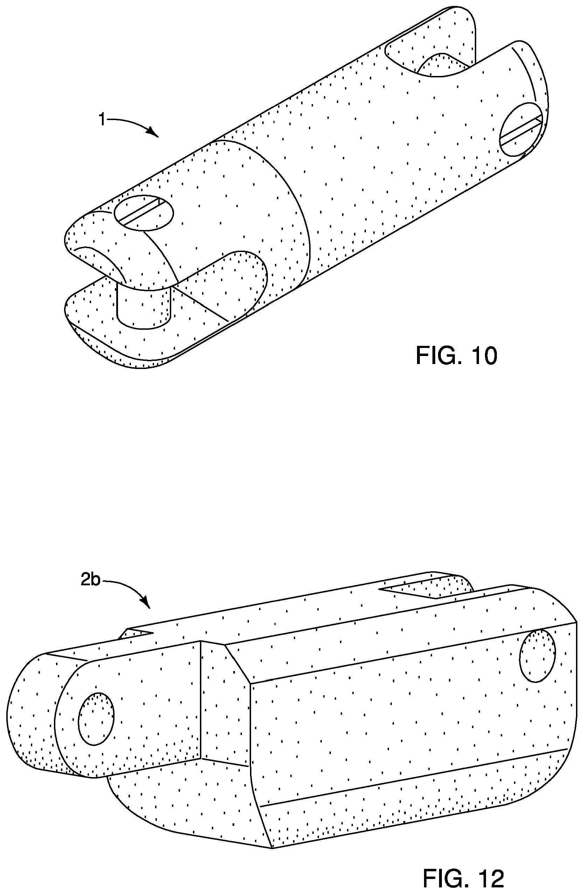

The tow component 300 may also advantageously comprise a conventional swivel connection 1, as seen in Figures 2 and 9 and better seen in Figure 10. A first end of swivel connection 1 is connected to the pulling line (not shown) to allow the pulling line to rotate and twist as it pulls the cable through the transmission/distribution network without affecting the operation of anti-rotation device 100.

The tow component 300 may also advantageously comprise one or more tail connector links interspersed between tow sections 3 along tow component 300. Two forms of tail connector links 4 as shown in figures 2 through9, 13, 15a and 15b and 4' as shown in figure 1 are illustrated. Tail connector links 4', although in applicant's view somewhat inferior to the design of tail connector links 4, are shown by way of example in Figure 1 so as to emphasize that various forms of tail connector links could be made to work, and that the anti-rotation device of the present disclosure is not intended to be limited to the design of tail connector link 4.

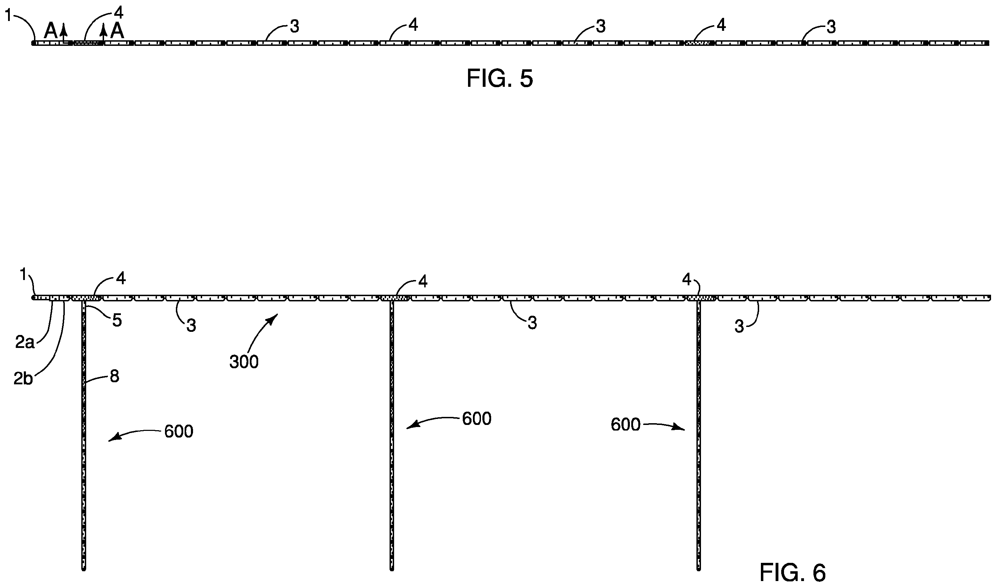

As seen in Figure 1, tail connector link 4' may be pivotally connected to electrically insulated weighted tail 600 by means of a hinged joint 9C at the leading end of tail connector link 4'. A dog leg offset tail connector section 5 may be employed to provide the advantageous offset described below which assists in the folding of the weighted tail up flush into a storage channel in the bottom of tow component 300. However, the embodiment in Figure 1 illustrates that the use of a dog leg section 5 is also not required, as other forms of connecting the insulated weighted tails to the tow component will also work. In Figure 1 insulated weighted tail 600 is mounted to tow component 300 at joint 9C. Joint 9C is formed in the side walls, at the leading end of the tail storage channel in tail connecting link 4'. This design is in applicant's view not as preferable as the design of tail connector links 4, such as seen in Figures 2 and 6, for the reasons set out below.

As seen in Figures 2 and 6, tail connector links 4 are connected to and interspaced between tow sections 3 along the length of the tow component 300. Like tail connector links 4', tail connector links 4 serve to support the insulated weighted tails 600 which are suspended in a pendulum like manner from the tow component 300. Tail connector links 4 connect the front links 2 to tow sections 3 and may connect the tail section 5 to a tow section 3. The front nose piece on tail connector 4 is long and narrow to allow the tow sections to rotate with each other up to 90° when pulled over stringing traveler or sheave 400 such as seen in Figure 4. The smaller the traveler diameter the bigger angle of rotation that is required. Storage channel 13 is formed along the underside of tail connector 4 and tow section 3 to accommodate the tail sections swinging up into flush temporary storage in channel 13 when the tow component is running over a stringing traveler or sheave 400.

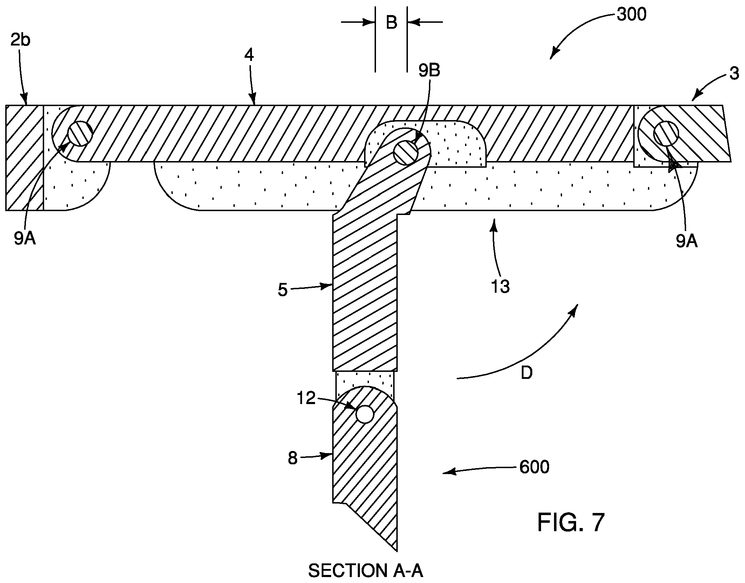

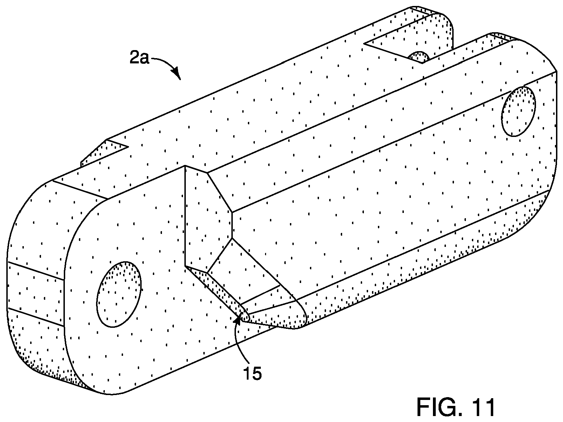

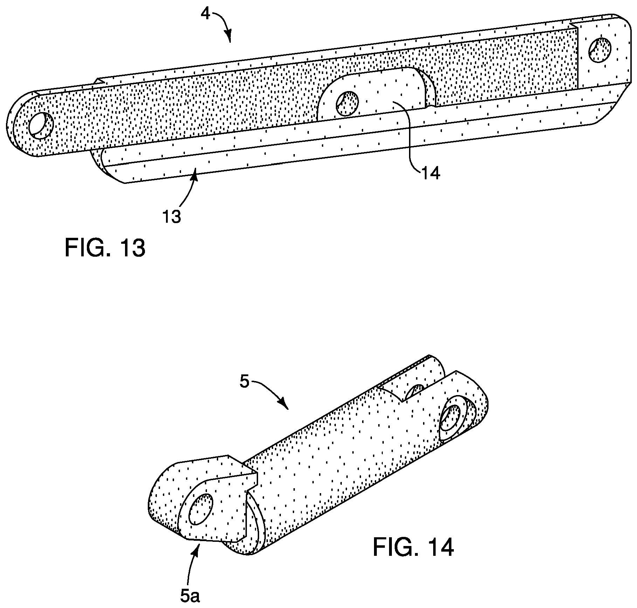

One such tail connector link 4 is shown for example in section view Figures 7 and 13. Hinged connections or joints 9A join tail connector links 4 to adjacent tow sections 3 or join tail connector links 4 to front main tow sections 2, made up of front and back main tow sections 2a and 2b respectively as seen in Figures 11 and 12. Front tow section 2a is a short link with angled leading edges 15 angled at 45° as seen in Figure 11 to assist in aligning the anti-rotation device 100 with stringing traveler or sheave 400 on an angle such as seen in Figure 3, which allows the anti-rotation device 100 to run smoothly through the traveler or sheave 400 without binding. The back or rear tow section 2b is a short link that connects front tow section 2a to tow section 3 or tail connector link 4. The separate sections 2a and 2b are coupled by a hinge to provide additional flexibility for the tow component when entering into a traveler or sheave 400. The two front links 2a and 2b taken together are the same length as the tow sections 3.

The tail connector link 4 includes a hinged connection or joint 9B for connecting the insulated weighted tail 600 to tow component 300, wherein joints 9A and 9B allow up to 90 degrees of rotation. The connection of tow component 300 to insulated weighted tail 600 is a rotating T-junction, rotating in plane of bending A, to allow rotation in, and to constrain rotation to, plane of bending A of insulated weighted tail 600 relative to tow component 300 when free to hang downwardly from the tow component 300.

The insulated weighted tail 600 is made up of one or more different tail sections 5, 8, 11, 6 and 7, preferably in the order as illustrated progressing downwardly in Figure 2 and as illustrated progressing downwardly along the right-hand tail section in Figure 9. The tail sections are connected end-to-end to one another in series using hinged connections or joints such as pinned hinges 10 and 12, to provide articulation in the plane-of-bending to the insulated weighted tail 600. Articulation allows the insulated weighted tail 600 to swing in the plane-of-bending A so as to swing away from or towards, while remaining in alignment with, the tow component 300 such as while the anti-rotation device 100 is pulled over traveler or sheave 400, as illustrated in Figures 3 and 4.

As noted, insulated weighted tail 600 comprises different types of tail sections. For example, as seen in Figures 2, 4, 7, 8, 15a and 15b, a dog-leg offset tail connector section 5 may advantageously be used to pivotally connect the insulated weighted tail 600 to the tow component 300 for rotation in the plane of bending A about the tail connector link 4. The offset arm 5a of tail connector section 5 provides an offset B as seen in Figure 7. Offset B between the long axis of tail connector section 5 and hinged connection 9B allows the hinged connection 9B to rotate up to 90° in direction D and to be mounted to a more solid main body of the tail connector link 4 rather than merely passing a hinge pin through the thinner walls of the storage channel 13 formed in the underside of link 4, while still permitting rotation of the tail 600 into its stored position within the storage channel 13 formed in the tow component. With the hinge pin of hinged connection 9B journaled through a thicker part of link 4, the hinge pin is less likely to be torn out of tail connection link 4 from the weight of the insulated weighted tail 600 for example combined with the stress on the pin due to pulling of anti-rotation device 100 through a traveler or sheave, or due to whipping of the corresponding tail component 600.

Each insulated weighted tail 600 includes one or more electrically insulated tail sections 8, releasably connected end-to-end to one another. For example, an insulated tail section 8 may be advantageously pivotally connected directly to, so as to depend from, the dog-leg tail connector 5 as the first or substantially the first of the tail sections in insulated weighted tail 600 as seen progressively extending downwardly from tow component 300. Electrically insulated tail sections 8 may preferably be made of insulated plastic, or fiberglass, or other rigid polymer, ceramic, etc. dielectric compositions so long as tail sections 8 provide electrical insulation between tow component 300 and the electrically conductive weighted tail sections 6 and 7 in insulated weighted tail 600, and so long as they provide sufficient strength in tension and shear. Advantageously the electrically conductive tail sections depending downwardly from the insulated tail sections 8 are made from dense or heavy material such as a dense metal to efficiently provide the resistive moment resisting the twisting of the cable. Insulated tail sections 8 serve to electrically isolate the lower weighted tail sections 6, and 7, from the tow component 300, and may not be of high density as they are not intended to significantly contribute to the counter rotation moment provided by the anti-rotation device 100 as they are mounted too close to the tow component 300 to have a significant moment arm.

The electrically insulated tail section 8, or insulated tail sections 8, if more than one, are advantageously mounted nearest to tail connector link 4. Again, because electrically insulated tail sections 8 are coupled closely adjacent to link 4, the counter-rotational moment they contribute is relatively small due to their shortened moment arm, no matter what they weigh. Thus, they may be of less dense electrically insulating material without significantly affecting the overall counter-moment provided by insulated weighted tail 600. Indeed, if insulated tail sections 8 are made of electrically insulating materials, e.g. plastics, fibreglass, ceramic, etc., and are less dense (weigh less) than weighted tail sections 6 and 7 which are for example made of heavier steel, copper, etc., then mounting insulating tail sections 8 close to tow component 300 allows the heavier weighted tail sections 6 and 7 to be mounted where they have a longer moment arm, thereby collectively increasing the counter rotational moment per tail section. Insulated tail sections 8 provide electrical isolation of the tow component 300 from adjacent conductors in the event that insulated weighted tail 600 flails or whips, for example, upon entering or leaving a sheave, about the longitudinal axis of the tow component 300 so as to swing weighted tail sections 6 and 7 out of the plane A' of sheave 400 as seen in Figure 3, and over into contact with an adjacent energized conductor or cable. Such an electrically conductive contact with an adjacent energized conductors or cables may have adverse effects on safety. The use of insulated tail sections 8 is intended to assist in avoiding such adverse effects.

A transition 11 pivotally connects the last or lower-most insulated tail section 8 and a first or upper-most weighted tail section 6 for relative rotation between sections 8, 11, and 6 in the plane of bending A. An end section 7 may also be pivotally connected to the lower-most tail section 6, again so as to articulate in the plane-of-bending A relative to tail sections 6.

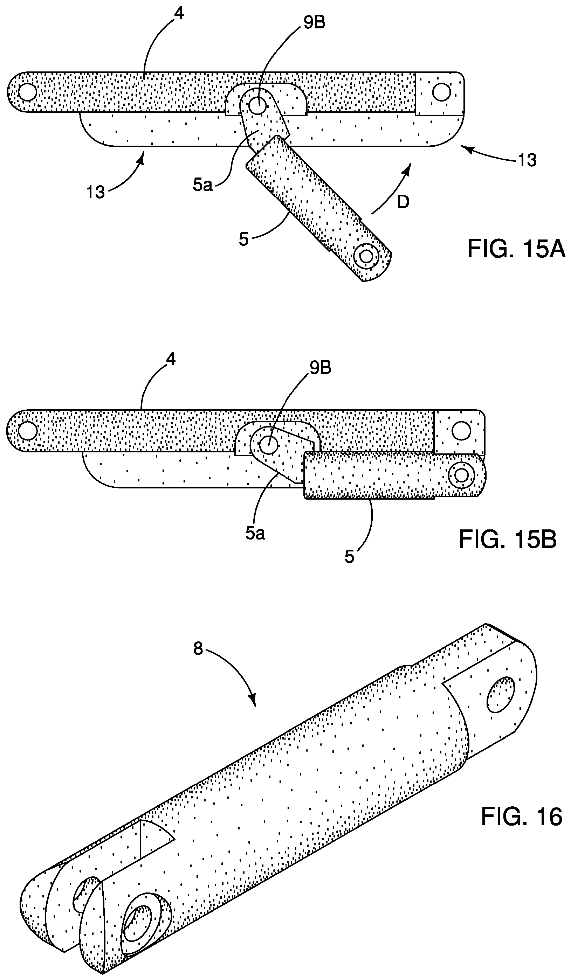

Hinge connections 9, 10 and 12 may be made with pins, screws, bolts or other suitable rotatable, releasable connectors as may be used to connect the various tow component sections together, the various tail sections together, and the tail component to the tow component to constrain articulation of the tow and tail sections solely to the plane of bending A. Thus advantageously the pivotal connections between sections provide relative movement between adjacent tow sections 2, 3, and 4 and adjacent tail sections 5, 6, 7, and 8 restricted to bending in the plane of bending by the use of hinged connections 9, 10 and 12. As most clearly seen in Figures 2, 7 and 9, the hinge connections 10 and 12 allow the respective tow or tail sections to rotate only about an axis of rotation C that is perpendicular to the plane of bending A; wherein the plane of bending A may be defined by the plane containing the length of insulated weighted tail 600 and the length of tow member 300 when the insulated weighted tail 600 is hanging freely vertically downwardly under a suspended tow member 300 when not in motion. Thus as better seen in Figure 7 and 15a, tail component 600 is free to rotate in direction D relative to tow component 300 about hinge 9B to as to stow tail component 600 into its storage channel 13 in and along the underside of tow component 300.

The hinge connections 9, 10 and 12 resist lateral bending of the insulated weighted tails 600, out of the plane of bending A and thus effectively convey the resistive moment of each insulated weighted tail 600 against rotation of the tow member 300 due to twisting of the cable or wire being pulled. The lateral orientation of the hinge pins, so as to be parallel to axis C, in hinge connections 10 and 12 also inhibits misalignment of the insulated weighted tail 600 between the traveler or sheave and the storage channel 13 formed in and along the bottom or the undersides of tow sections 3 and 4 as both the tow component 300 and the tail component 600 are pulled through the traveler or sheave 400. The tail 600 nests within storage channels 13 in tow sections 3 and 4 during travel of the tail 600 around the sheave 400. Mis-alignment of insulated weighted tail 600 relative to the storage channel 13 during entry of the tail and corresponding tow components into the traveler or sheave may cause the tail to be pinched between the tow component 300 and the traveler or sheave 400 as seen illustrated by way of example in Figure 3 wherein the misalignment leading to pinching is indicated by the tail component 600 (lying in the plane of bending A) not being aligned with the plane A' containing the traveler or sheave.

In a further preferred embodiment, the present anti-rotation device 100 can be arranged wherein the spacing along tow member 300 between insulated weighted tails 600 is greater, by a predetermined length, than a length of each insulated weighted tail 600. This allows for, during stringing of the cable or wire, more tail sections 6, 7, and 8 to be added to each insulated weighted tail 600. Tail sections 6, 7, and 8 can be added for a number of reasons. Insulating tail sections 8 can be added to increase electrical insulation value between the weighted tail sections 6, and 7 and the tow component 300, for example for re-use of the anti-rotation device 100 in an energized environment at higher voltages. Weighted tail sections 6 can be added to provide further anti-rotational weight to the anti-rotational device 100 in situations where additional weight i.e., more torque resistance, is required, subject to the potential drawbacks of longer insulated weighted sections as discussed below. Such situations can include environmental conditions such as wind, or conditions in the cable such as excessive twisting of the cable when it was spooled on its storage spool or reel and pulling the cable around many corners or turns.

In the embodiment illustrated in Figures 2, 5, 6 and 9, the adjacent tail components 600 are separated by nine tow sections 3, and each tail component includes eight electrically insulated tail sections 8 coupled under the tail connector section 5, and eight weighted tail sections 6 (including transition tail section 11) coupled under the insulated tail sections 8. Weighted end section 7 is lowermost, under the weighted tail sections.

Applicant has found during testing that in some instances, depending on the force of the cable twist and the speed with which the anti-rotation device is pulled through the travelers or sheaves, that the number of weighted tail sections could be reduced in number, for example, surprisingly, to only two weighted tail sections 6 without a significant noticeable reduction in the resistance to twisting rotation from the cable being pulled. One benefit of reducing the number of weighted tail sections 6 was that in some cases the lowermost weighted tail sections, and the weighted end section 7, whipped back up and over the lower end of the tail component, as shown by arrow E on the left most tail component in Figure 9. The force of the whipping motion was sufficient apparently to slightly distort the hinges, including the flanges on the weighted tail sections forming the hinges, so as to allow the whipping of the lowermost weighted tail sections to deflect the lowermost weighted tail sections out of the plane of bending A. The result was a half pretzel-like knot in the lowermost end of the tail component. Removing some or most of the weighted tail sections in each tail component appeared to resolve the whipping issue causing the knotting. The reduction in the length of the tail components then allowed the tow components to be shortened, for example from nine main tow sections 3 to six tow sections 3 between adjacent tail components. In this embodiment then, for each tail component, the electrically insulated tail sections may be described as having a cumulative insulated length and the weighted tail sections as having a cumulative weighted length, wherein in this embodiment the ratio of cumulative insulated length to cumulative weighted length may be 4:1. In the embodiment of Figure 9, the ratio was 1:1, which appeared to allow for the whipping observed of the lower end of the weighted tail sections.

The previous description of the disclosed embodiments is provided to enable any person skilled in the art to make or use the present disclosure. Various modifications to those embodiments will be readily apparent to those skilled in the art, and the generic principles defined herein may be applied to other embodiments without departing from the scope of the present invention as set out in the claims. Thus, the present disclosure is not intended to be limited to the embodiments shown herein, but is to be accorded the full scope consistent with the claims, wherein reference to an element in the singular, such as by use of the article "a" or "an" is not intended to mean "one and only one" unless specifically so stated, but rather "one or more". Moreover, nothing disclosed herein is intended to be dedicated to the public regardless of whether such disclosure is explicitly recited in the claims.

## Claims

1. A process for producing an anti-rotation device (100) configured to resist twisting of a cable or wire as it is strung through a transmission/distribution network, said device comprising a tow component (300) having at least one tail storage channel (13) formed therein and connectable to the cable or wire at one end, and at least one tail component (600) suspended from the tow component wherein the at least one tail component includes weighted tail sections (6, 7) removably connected end-to-end to one another and at least one electrically insulated tail section (8) pivotally mounted end-to-end to the weighted tail sections between the tow component and the weighted tail sections adjacent the tow component, and positioned along the tow component so that the at least one tail component is completely nested in and along the at least one tail storage channel as the tow component and the at least one tail component are pulled through a sheave during the stringing of the cable or wire, the process comprising:
a) determining a peak rotational force twisting moment of the cable or wire as it is strung through the transmission/distribution network;
b) determining a length and distributed weight requirement for the at least one tail component to produce a counter-moment, substantially more than or equal to and counter to the peak rotational force twisting moment of the cable or wire;
c) providing
(i) a number of the weighted tail sections determined to meet the length and weight requirement of the at least one tail component wherein the length requirement of the at least one tail component is constrained by the length of the at least one tail storage channel which extends between adjacent tail components of the at least one tail component mounted on the tow component, and the width of the at least one tail component is constrained by the width of the storage channel, wherein the constrained length and width of the at least one tail component, and the material and hence weight of each weighted tail section is determined by the distributed weight requirement to produce the required counter-moment produced by the at least one tail component; and wherein the weighted tail sections are adapted for end-to-end connection to one another,
(ii) the at least one electrically insulated tail section adapted for end-to-end connection to at least one weighted tail section, wherein the at least one electrically insulated tail section is of a lower density than the weighted tail sections and comprises a dielectric composition,
d) connecting the weighted tail sections and the at least one electrically insulated tail section so as to form the at least one tail component and connecting the at least one tail component to the tow component, wherein the pivotal end-to-end mounting between the weighted tail sections and the at least one electrically insulated tail section is configured to constrain articulation of the at least one tail component to solely within a single plane of bending (A) of the tow component to thereby cause the at least one tail component to remain aligned with the tow component and the at least one tail storage channel during the pulling through the sheave.

2. The process of claim 1, wherein the tow component is comprised of a plurality of tow sections (3) releasably and pivotally connected to one another and constrained by hinged connections for rotation relative to one another only in the single plane of bending of the tow component, and wherein the at least one tail component is a plurality of tail components spaced apart in a spaced array along the tow component, each of the tail components of the plurality of tail components constrained by hinged connections between the weighted tail sections for rotation relative to one another and to the tow component only in the single plane of bending.

3. The process of claim 1, wherein the at least one electrically insulated tail section is located immediately adjacent and adjoined to the tow component.

4. The process of claim 1, wherein for each at least one tail component the at least one electrically insulated tail sections have a cumulative insulated length and the weighted tail sections have a cumulative weighted length, and wherein the ratio of cumulative insulated length to cumulative weighted length is 4:1.

5. The process of claim 1, further comprising connecting a dog leg connector (5) between the at least one electrically insulated tail section and the tow component.

6. An anti-rotation device (100) for resisting twisting of a cable or wire as it is strung in a stringing direction from an upstream end to a downstream end through a transmission/distribution network, the device comprising:
a) a tow component (300) adapted to be connected to the cable or wire wherein the tow component includes a plurality of tow sections (3);
b) a plurality of elongate tail components (600) suspended from and pivotally mounted to the tow component in a spaced apart array along the tow component, for pivotal rotation of the plurality of elongate tail components between a suspended position suspended below the tow component and a pivoted position flush along the tow component, wherein each of the tail components includes:
(i) at least one weighted tail section (6, 7); and
(ii) at least one electrically insulated tail section (8) connected end-to-end to the at least one weighted tail section, between the at least one weighted tail section and the tow component, wherein the at least one electrically insulated tail section is of a lower density than the at least one weighted tail section and comprises a dielectric composition;
wherein the tail components are spaced along the tow component such that a first length of the tow component between adjacent first and second tail components is at least equal in length to a length of the first tail component, wherein the first tail component is adapted to be downstream of the second tail component in the stringing direction, and wherein each tow section of the plurality of tow sections has a storage channel (13) formed along the undersides thereof so as to collectively form a linear tail storage channel having a width and a length under and along the tow component, and wherein the width of each tail section is constrained by the width of the tail storage channel extending between the adjacent first and second tail components so that the first tail component is snugly received in the tail storage channel as the tow component and first tail component pass over a traveler or sheave in the network during the stringing,
wherein the length and width of each tail component, and the material of each tail component determines its weight distribution and the amount of counter-moment produced by each tail component; and wherein the spaced apart array of tail components are adapted to provide a counter-moment, counter to the rotational twisting of the cable or wire.

7. The anti-rotation device of claim 6, wherein the plurality of tow sections are releasably and pivotally connected end-to-end to one another for rotation relative to one another only in the single plane of bending (A) of the tow component.

8. The anti-rotation device of claim 7, wherein, for each of the tail components, the at least one electrically insulated tail section is located adjacent the tow component and the at least one weighted tail section is a plurality of weighted tail sections, which are suspended from the at least one electrically insulated tail section, and wherein the weighted tail sections are constrained for rotation relative to one another and relative to the tow component only in the single plane of bending of the tow component.

9. The anti-rotation device of claim 7, for each of the tail components, the at least one electrically insulated tail section includes a plurality of contiguously pivotally mounted electrically insulated tail sections.

10. The anti-rotation device of claim 9, wherein the insulated tail sections and the tow sections are said pivotally mounted by pivoting hinges between each of the tow sections and between each of the tail sections, and between an uppermost end of the tail components and the tow component so as to articulate only in the single plane of bending, to thereby remain in alignment with the tail-storage channel in the bottom of the tow component when pulled through a traveler or sheave.

11. The anti-rotation device of claim 10, further comprising a dog leg connector (5) pivotally connecting between the tail components and the tow components to articulate the tail components in the single plane of bending.

12. The anti-rotation device of claim 8, wherein, for each tail component the electrically insulated tail sections have a cumulative insulated length and the weighted tail sections have a cumulative weighted length, and wherein the ratio of cumulative insulated length to cumulative weighted length is 4:1.

## Patentansprüche

1. Verfahren zur Herstellung einer Anti-Rotationsvorrichtung (100), die konfiguriert ist, um einem Verdrehen eines Kabels oder Drahts zu widerstehen, wenn dieses/r durch ein Übertragungs-/Verteilungsnetz verlegt wird, wobei die Vorrichtung aufweist
eine Schleppkomponente (300) mit mindestens einem darin ausgebildeten Endlagerkanal (13), der an einem Ende mit dem Kabel oder Draht verbindbar ist, und mindestens eine Endkomponente (600), die an der Schleppkomponente aufgehängt ist, wobei die mindestens eine Endkomponente beschwerte Endabschnitte (6, 7), die lösbar Ende an Ende miteinander verbunden sind, und mindestens einen elektrisch isolierten Endabschnitt (8) umfasst, der schwenkbar Ende an Ende an den beschwerten Endabschnitten zwischen der Schleppkomponente und den beschwerten Endabschnitten benachbart zu der Schleppkomponente angebracht ist, und entlang der Schleppkomponente so positioniert ist, dass die mindestens eine Endkomponente vollständig in und entlang des mindestens einen Endlagerkanals verschachtelt ist, wenn die Schleppkomponente und die mindestens eine Endkomponente während des Ziehens des Kabels oder Drahts durch eine Seilscheibe gezogen werden, wobei das Verfahren umfasst:
a) Bestimmen eines Spitzen-Drehkraft-Torsionsmoments des Kabels oder Drahts, während es durch das Übertragungs-/Verteilungsnetz gezogen wird;
b) Bestimmen einer Längen- und verteilten Gewichtsanforderung für die mindestens eine Endkomponente, um ein Gegenmoment zu erzeugen, das im Wesentlichen größer oder gleich dem Spitzen-Drehkraft-Torsionsmoments des Kabels oder Drahtes ist und diesem entgegenwirkt;
c) Bereitstellen
(i) einer Anzahl der beschwerten Endabschnitte, die bestimmt sind, um die Längen- und Gewichtsanforderung der mindestens einen Endkomponente zu erfüllen, wobei die Längenanforderung der mindestens einen Endkomponente durch die Länge des mindestens einen Endlagerkanals, der sich zwischen benachbarten Endkomponenten der mindestens einen an der Schleppkomponente angebrachten Endkomponente erstreckt, eingeschränkt wird und die Breite der mindestens einen Endkomponente durch die Breite des Lagerkanals eingeschränkt wird, wobei die eingeschränkte Länge und Breite der mindestens einen Endkomponente und das Material und somit das Gewicht jedes beschwerten Endabschnitts durch die verteilte Gewichtsanforderung bestimmt wird, um das erforderliche Gegenmoment zu erzeugen, das von der mindestens einen Endkomponente erzeugt wird; und wobei die beschwerten Endabschnitte für eine Ende-an-Ende-Verbindung miteinander ausgelegt sind,
(ii) des mindestens einen elektrisch isolierten Endabschnitts, der für eine Ende-an-Ende-Verbindung mit mindestens einem beschwerten Endabschnitt ausgelegt ist, wobei der mindestens eine elektrisch isolierte Endabschnitt eine geringere Dichte als die beschwerten Endabschnitte aufweist und eine dielektrische Zusammensetzung aufweist,
d) Verbinden der beschwerten Endabschnitte und des mindestens einen elektrisch isolierten Endabschnitts, um die mindestens eine Endkomponente zu bilden und Verbinden der mindestens einen Endkomponente mit der Schleppkomponente, wobei die schwenkbare Ende-zu-Ende-Befestigung zwischen den beschwerten Endabschnitten und dem mindestens einen elektrisch isolierten Endabschnitt konfiguriert ist, um eine Gelenkigkeit der mindestens einen Endkomponente auf ausschließlich innerhalb einer einzigen Biegeebene (A) der Schleppkomponente zu beschränken, um dadurch zu bewirken, dass die mindestens eine Endkomponente mit der Schleppkomponente und dem mindestens einen Endlagerkanal während des Ziehens durch die Seilscheibe ausgerichtet bleibt.

2. Verfahren nach Anspruch 1, wobei die Schleppkomponente eine Vielzahl von Schleppabschnitten (3) aufweist, die lösbar und schwenkbar miteinander verbunden sind und durch Scharnierverbindungen zu einer Drehung relativ zueinander nur in der einzigen Biegeebene der Schleppkomponente eingeschränkt sind, und wobei die mindestens eine Endkomponente eine Vielzahl von Endkomponenten ist, die in einer beabstandeten Anordnung entlang der Schleppkomponente beabstandet sind, wobei jede der Endkomponenten der Vielzahl von Endkomponenten durch Scharnierverbindungen zwischen den beschwerten Endabschnitten zu einer Drehung relativ zueinander und zu der Schleppkomponente nur in der einzigen Biegeebene eingeschränkt ist.

3. Verfahren nach Anspruch 1, wobei der mindestens eine elektrisch isolierte Endabschnitt unmittelbar benachbart und angrenzend an die Schleppkomponente angeordnet ist.

4. Verfahren nach Anspruch 1, wobei für jede mindestens eine Endkomponente die mindestens einen elektrisch isolierten Endabschnitte eine kumulative isolierte Länge und die beschwerten Endabschnitte eine kumulative beschwerte Länge aufweisen, und wobei das Verhältnis der kumulativen isolierten Länge zur kumulativen beschwerten Länge 4:1 beträgt.

5. Verfahren nach Anspruch 1 umfasst ferner das Verbinden eines Dog Leg Verbinders (5) zwischen dem mindestens einen elektrisch isolierten Endabschnitt und der Schleppkomponente.

6. Anti-Rotationsvorrichtung (100), um einem Verdrehen eines Kabels oder Drahtes zu widerstehen, wenn es/er in einer Ziehrichtung von einem stromaufwärts gelegenen Ende zu einem stromabwärts gelegenen Ende durch ein Übertragungs-/Verteilungsnetz gezogen wird, wobei die Vorrichtung umfasst
a) eine Schleppkomponente (300), die mit dem Kabel oder Draht zu verbinden ist, wobei die Schleppkomponente eine Vielzahl von Schleppabschnitten (3) umfasst;
b) eine Vielzahl länglicher Endkomponenten (600), die an der Schleppkomponente in einer beabstandeten Anordnung entlang der Schleppkomponente aufgehängt und schwenkbar daran befestigt sind, für eine schwenkbare Rotation der Vielzahl von länglichen Endkomponenten zwischen einer aufgehängten Position, in der sie unter der Schleppkomponente aufgehängt sind, und einer geschwenkten Position, in der sie bündig entlang der Schleppkomponente angeordnet sind, wobei jede der Endkomponenten umfasst:
(i) mindestens einen beschwerten Endabschnitt (6, 7); und
(ii) mindestens einen elektrisch isolierten Endabschnitt (8), der Ende an Ende mit dem mindestens einen beschwerten Endabschnitt zwischen dem mindestens einen beschwerten Endabschnitt und der Schleppkomponente verbunden ist, wobei der mindestens eine elektrisch isolierte Endabschnitt eine geringere Dichte als der mindestens eine beschwerte Endabschnitt aufweist und eine dielektrische Zusammensetzung aufweist;
wobei die Endkomponenten entlang der Schleppkomponente so beabstandet sind, dass eine erste Länge der Schleppkomponente zwischen benachbarten ersten und zweiten Endkomponenten in ihrer Länge mindestens gleich einer Länge der ersten Endkomponente ist,
wobei die erste Endkomponente ausgebildet ist, um in der Ziehrichtung stromabwärts der zweiten Endkomponente zu liegen, und wobei jeder Schleppabschnitt der Vielzahl von Schleppabschnitten einen Lagerkanal (13) aufweist, der entlang ihrer Unterseiten ausgebildet ist, um so gemeinsam einen linearen Endlagerkanal mit einer Breite und einer Länge unter und entlang der Schleppkomponente zu bilden, und wobei die Breite jedes Endabschnitts durch die Breite des Endlagerkanals begrenzt ist, der sich zwischen den benachbarten ersten und zweiten Endkomponenten erstreckt, so dass die erste Endkomponente eng anliegend in dem Endlagerkanal aufgenommen ist, wenn die Schleppkomponente und die erste Endkomponente während des Ziehens über eine Umlenkrolle oder eine Seilscheibe in dem Netz laufen,
wobei die Länge und Breite jeder Endkomponente und das Material jeder Endkomponente ihre Gewichtsverteilung und das Ausmaß des von jeder Endkomponente erzeugten Gegenmoments bestimmt; und wobei die beabstandete Anordnung von Endkomponenten beschaffen ist, ein Gegenmoment bereitzustellen, das der Rotationsverdrehung des Kabels oder Drahts entgegenwirkt.

7. Anti-Rotationsvorrichtung nach Anspruch 6, wobei die Vielzahl von Schleppabschnitten lösbar und schwenkbar Ende an Ende miteinander verbunden sind, um sich nur in der einzigen Biegeebene (A) der Schleppkomponente relativ zueinander zu drehen.

8. Anti-Rotationsvorrichtung nach Anspruch 7, wobei für jede der Endkomponenten der mindestens eine elektrisch isolierte Endabschnitt angrenzend an die Schleppkomponente angeordnet ist und der mindestens eine beschwerte Endabschnitt eine Vielzahl von beschwerten Endabschnitten ist, die an dem mindestens einen elektrisch isolierten Endabschnitt aufgehängt sind, und wobei die beschwerten Endabschnitte zur Drehung relativ zueinander und relativ zu der Schleppkomponente nur in der einzigen Biegeebene der Schleppkomponente eingeschränkt sind.

9. Anti-Rotationsvorrichtung nach Anspruch 7, wobei für jede der Endkomponenten der mindestens eine elektrisch isolierte Endabschnitt eine Vielzahl von aneinandergrenzenden, schwenkbar montierten, elektrisch isolierten Endabschnitten umfasst.

10. Anti-Rotationsvorrichtung nach Anspruch 9, wobei die isolierten Endabschnitte und die Schleppabschnitte durch Scharniergelenke zwischen jedem der Schleppabschnitte und zwischen jedem der Endabschnitte sowie zwischen einem obersten Ende der Endkomponenten und der Schleppkomponente schwenkbar angebracht sind, so dass sie nur in der einzigen Biegeebene schwenkbar sind, um dadurch mit dem Endlagerkanal im Boden der Schleppkomponente ausgerichtet zu bleiben, wenn sie durch eine Umlenkrolle oder eine Seilscheibe gezogen werden.

11. Anti-Rotationsvorrichtung nach Anspruch 10, wobei sie ferner einen Dog Leg Verbinder (5) aufweist, der eine schwenkbare Verbindung zwischen den Endkomponenten und den Schleppkomponenten herstellt, um die Endkomponenten in der einzigen Biegeebene zu schwenken.

12. Anti-Rotationsvorrichtung nach Anspruch 8, wobei für jede Endkomponente die elektrisch isolierten Endabschnitte eine kumulative isolierte Länge und die beschwerten Endabschnitte eine kumulative beschwerte Länge aufweisen, und wobei das Verhältnis der kumulativen isolierten Länge zur kumulativen beschwerten Länge 4: 1 beträgt.

## Revendications

1. - Procédé de fabrication d'un dispositif anti-rotation (100) configuré pour résister à la torsion d'un câble ou fil lorsqu'il est déroulé à travers un réseau de transmission/distribution, ledit dispositif comprenant un composant de tractage (300) ayant au moins un canal de stockage de queue (13) formé dans celui-ci et apte à être relié au câble ou fil à une extrémité, et au moins un composant de queue (600) suspendu à partir du composant de tractage, l'au moins un composant de queue comprenant des sections de queue lestées (6, 7) reliées de manière amovible bout à bout les unes aux autres et au moins une section de queue isolée électriquement (8) montée de manière pivotante bout à bout sur les sections de queue lestées entre le composant de tractage et les sections de queue lestées adjacentes au composant de tractage, et positionné le long du composant de tractage de manière à ce que l'au moins un composant de queue soit complètement emboîté dans et le long de l'au moins un canal de stockage de queue lorsque le composant de tractage et l'au moins un composant de queue sont tirés par l'intermédiaire d'un réa pendant le déroulage du câble ou fil, le procédé comprenant :
a) déterminer un moment de torsion de force de rotation de pic du câble ou fil lorsqu'il est déroulé à travers le réseau de transmission/distribution ;
b) déterminer une exigence de longueur et de poids réparti pour l'au moins un composant de queue afin de produire un contre-moment, sensiblement supérieur ou égal et opposé au moment de torsion de force de rotation de pic du câble ou fil ;
c) fournir
(i) un nombre des sections de queue lestées déterminé pour répondre à l'exigence de longueur et de poids de l'au moins un composant de queue, l'exigence de longueur de l'au moins un composant de queue étant limitée par la longueur de l'au moins un canal de stockage de queue qui s'étend entre des composants de queue adjacents de l'au moins un composant de queue monté sur le composant de tractage, et la largeur de l'au moins un composant de queue étant limitée par la largeur du canal de stockage, la longueur et la largeur limitées de l'au moins un composant de queue, ainsi que le matériau et donc le poids de chaque section de queue lestée étant déterminés par l'exigence de poids réparti pour produire le contre-moment requis produit par l'au moins un composant de queue ; et les sections de queue lestées étant conçues pour une liaison bout à bout les unes aux autres,
(ii) l'au moins une section de queue isolée électriquement, conçue pour une liaison bout à bout à au moins une section de queue lestée, l'au moins une section de queue isolée électriquement étant d'une densité inférieure à celle des sections de queue lestées et comprenant une composition diélectrique,
d) relier les sections de queue lestées et l'au moins une section de queue isolée électriquement de manière à former l'au moins un composant de queue et relier l'au moins un composant de queue au composant de tractage, le montage pivotant bout à bout entre les sections de queue lestées et l'au moins une section de queue isolée électriquement étant configuré pour limiter l'articulation de l'au moins un composant de queue uniquement à un seul plan de flexion (A) du composant de tractage pour ainsi amener l'au moins un composant de queue à rester aligné avec le composant de tractage et l'au moins un canal de stockage de queue pendant la traction par l'intermédiaire du réa.

2. - Procédé selon la revendication 1, dans lequel le composant de tractage est composé d'une pluralité de sections de tractage (3) reliées les uns aux autres de manière amovible et pivotante et contraintes par des liaisons articulées pour une rotation les unes par rapport aux autres uniquement dans l'unique plan de flexion du composant de tractage, et dans lequel l'au moins un composant de queue est une pluralité de composants de queue espacés dans un réseau espacé le long du composant de tractage, chacun des composants de queue de la pluralité de composants de queue étant contraint par des liaisons articulées entre les sections de queue lestées pour une rotation les uns par rapport aux autres et par rapport au composant de tractage uniquement dans l'unique plan de flexion.

3. - Procédé selon la revendication 1, dans lequel l'au moins une section de queue isolée électriquement est située de manière immédiatement adjacente et contiguë avec le composant de tractage.

4. - Procédé selon la revendication 1, dans lequel, pour chaque au moins un composant de queue, l'au moins une section de queue isolée électriquement a une longueur isolée cumulée et les sections de queue lestées ont une longueur lestée cumulée, et dans lequel le rapport de la longueur isolée cumulée sur la longueur lestée cumulée est de 4:1.

5. - Procédé selon la revendication 1, comprenant en outre un connecteur coudé (5) entre l'au moins une section de queue isolée électriquement et le composant de tractage.

6. - Dispositif anti-rotation (100) pour résister à la torsion d'un câble ou fil lorsqu'il est déroulé dans une direction de déroulage d'une extrémité amont à une extrémité aval à travers un réseau de transmission/distribution, le dispositif comprenant :
a) un composant de tractage (300) conçu pour être relié au câble ou fil, le composant de tractage comprenant une pluralité de sections de tractage (3) ;
b) une pluralité de composants de queue allongés (600) suspendus à partir de et montés de manière pivotante sur le composant de tractage dans un réseau espacé le long du composant de tractage, pour une rotation pivotante de la pluralité de composants de queue allongés entre une position suspendue qui est suspendue sous le composant de tractage et une position pivotée affleurant le long du composant de tractage, chacun des composants de queue comprenant :
(i) au moins une section de queue lestée (6, 7) ; et
(ii) au moins une section de queue isolée électriquement (8) reliée bout à bout à la section de queue lestée, entre l'au moins une section de queue lestée et le composant de tractage, l'au moins une section de queue isolée électriquement étant d'une densité inférieure à celle de l'au moins une section de queue lestée et comprenant une composition diélectrique ;
dans lequel les composants de queue sont espacés le long du composant de tractage de telle sorte qu'une première longueur du composant de tractage entre des premier et seconde composants de queue adjacents est au moins égale en longueur à une longueur du premier composant de queue, dans lequel le premier composant de queue est conçu pour être en aval du second composant de queue dans la direction de déroulage, et dans lequel chaque section de tractage de la pluralité de sections de tractage a un canal de stockage (13) formé le long des faces inférieures de celle-ci de manière à former collectivement un canal de stockage de queue linéaire ayant une largeur et une longueur en dessous et le long du composant de tractage, et dans lequel la largeur de chaque section de queue est limitée par la largeur du canal de stockage de queue qui s'étend entre les premier et seconds composants de queue adjacents de telle sorte que le premier composant de queue est reçu de manière ajustée dans le canal de stockage de queue lorsque le composant de tractage et le premier composant de queue passent sur un coulisseau ou un réa dans le réseau pendant le déroulage,
dans lequel la longueur et la largeur de chaque composant de queue, ainsi que le matériau de chaque composant de queue déterminent sa répartition en poids et la quantité de contre-moment produit par chaque composant de queue ; et dans lequel le réseau espacé de composants de queue est conçu pour fournir un contre-moment, à l'encontre de la torsion de rotation du câble ou fil.

7. - Dispositif anti-rotation selon la revendication 6, dans lequel la pluralité de sections de tractage sont reliées de manière amovible et pivotante bout à bout les unes aux autres pour une rotation les unes par rapport aux autres uniquement dans l'unique plan de flexion (A) du composant de tractage.

8. - Dispositif anti-rotation selon la revendication 7, dans lequel, pour chacun des composants de queue, l'au moins une section de queue isolée électriquement est située de manière adjacente au composant de tractage et l'au moins une section de queue lestée est une pluralité de sections de queue lestées, qui sont suspendues à partir de l'au moins une section de queue isolée électriquement, et dans lequel les sections de queue lestées sont contraintes pour une rotation les unes par rapport aux autres et par rapport au composant de tractage uniquement dans l'unique plan de flexion du composant de tractage.

9. - Dispositif anti-rotation selon la revendication 7, dans lequel, pour chacun des composants de queue, l'au moins une section de queue isolée électriquement comprend une pluralité de sections de queue isolées électriquement montées de manière pivotante et contiguë.

10. - Dispositif anti-rotation selon la revendication 9, dans lequel les sections de queue isolées et les sections de tractage sont montées de manière pivotante par des charnières de pivotement entre chacune des sections de tractage et entre chacune des sections de queue, et entre une extrémité la plus haute des composants de queue et le composant de tractage de manière à s'articuler uniquement dans l'unique plan de flexion, pour rester ainsi en alignement avec le canal de stockage de queue dans la partie inférieure du composant de tractage lors d'une traction par l'intermédiaire d'un coulisseau ou d'un réa.

11. - Dispositif anti-rotation selon la revendication 10, comprenant en outre un connecteur coudé (5) se reliant de manière pivotante entre les composants de la queue et les composants de tractage pour articuler les composants de queue dans l'unique plan de flexion.

12. - Dispositif anti-rotation selon la revendication 8, dans lequel, pour chaque composant de queue, les sections de queue isolées électriquement ont une longueur isolée cumulée et les sections de queue lestées ont une longueur lestée cumulée, et dans lequel le rapport de la longueur isolée cumulée sur la longueur lestée cumulée est de 4:1.
